# EUROPEAN PATENT APPLICATION

(11) **EP 4 344 154 A1**
(43) Date of publication of application: **27.03.2024**
(21) Application number: 23198670.4
(22) Date of filing: 20.09.2023
(51) Int. Cl.: H04L 47/193, H04L 47/27, H04L 47/283

(54) **SYSTEM AND METHOD FOR MANAGING NETWORK TRAFFIC IN A DISTRIBUTED ENVIRONMENT**

(30) Priority: 21.09.2022 IN 202211054001
(71) Applicant: Sandvine Corporation, Waterloo, Ontario N2L 3V3 (CA)
(72) Inventor: SARKAR, Nilanjan, 560067 Bangalore, Karnataka (IN); MULKAR, Tushar, 560066 Bangalore, Karnataka (IN); MITTAL, Ambuj, 560103 Bengaluru, Karnataka (IN)
(74) Representative: Ipey

(57) **Abstract**

A method and system for distributed traffic management, the method comprising receiving an initial communication of a traffic flow at first accelerator system; retrieving message parameters from the initial communication; broadcasting the message parameters to determine a second accelerator system receiving a reply to the initial communication; and pairing the first and the second accelerator system to provide for traffic management. The system including: a first accelerator system having: a packet processor configured to receive an initial communication of a traffic flow; a logic node configured to retrieve message parameters from the initial communication; a trigger module configured to broadcast the message parameters to at least one other accelerator system; wherein the logic node is configured to pair the first accelerator system with a second accelerator system to provide for traffic management of the traffic flow.

## Description

### RELATED APPLICATIONS

This application claims priority on Indian Patent Application No. 202211054001 filed September 21, 2022.

### FIELD

The present disclosure relates generally to computer network traffic. More particularly, the present disclosure relates to a system and method for managing network traffic, in a distributed environment.

### BACKGROUND

Service Providers, including Internet Service Providers (ISP) as well as content providers, generally try to provide the greatest Quality of Services (QoS) to the greatest number of users given network constraints. As more people access content via online networks, congestion continues to grow. Various congestion control strategies have been used to attempt to improve the Quality of Services (QoS) and the Quality of Experience (QoE) to users on the network.

Transmission Control Protocol (TCP) is one of the main protocols used for online communication. It is a defined standard that is generally used to establish and maintain a network connection by which applications can exchange data over the Internet. Many Internet applications rely on TCP to deliver data to the users of the network. TCP is intended to provide a reliable and error checked traffic stream between a client and a server.

As connectivity speed and reliability of online access increases, any type of delay for a user tends to be viewed negatively. Further, as networks become distributed, coordination is harder to maintain throughout the computer network. As such, there is a need for an improved method and system for managing network traffic in a distributed environment.

The above information is presented as background information only to assist with an understanding of the present disclosure. No determination has been made, and no assertion is made, as to whether any of the above might be applicable as prior art with regard to the present disclosure.

### SUMMARY

In a first aspect, there is provided a method for distributed traffic management on a computer network, the method comprising, receiving an initial communication of a traffic flow by a packet processor of a first accelerator system; retrieving message parameters from the initial communication; broadcasting the message parameters to determine a second accelerator system receiving a reply to the initial communication; and pairing the first accelerator system and the second accelerator system to provide for traffic management of the traffic flow.

In some cases, the method further includes: receiving a data segment at the first accelerator system; adding the data segment to a local cache of the first accelerator system; triggering an acknowledgement message from the second accelerator system; and sending the acknowledgement to a sender of the data segment from the second accelerator system.

In some cases, sending an acknowledgement includes sending pre-acknowledgement to provide for flow acceleration for the traffic flow.

In some cases, the method includes using early retransmission from the local cache on determination of packet loss for the traffic flow.

In some cases, the method includes advertising a window size associated with the traffic flow to be higher than an initial size to increase the available bandwidth for the traffic flow.

In some cases, the method further includes: receiving an acknowledgment for a data segment from a recipient of the traffic flow at the second accelerator system; and triggering a release from cache of the acknowledged segment from the first accelerator system.

In some cases, the method further includes: retrieving policies from a policy engine to influence the behavior of the first and second accelerator system.

In some cases, the traffic flow is a Transmission Control Protocol traffic flow.

In some cases, the traffic flow is a User Datagram Protocol or QUIC traffic protocol.

In some cases, the method further includes sending at least one sync-up protocol message between the first and the second accelerator system at predetermined time intervals.

In some cases, the predetermined time interval is based on a round trip time of the traffic flow.

In some cases, messages between the first and the second accelerator system are batched messages.

In another aspect, there is provided a system for distributed traffic management on a computer network, the system including: a first accelerator system having: a packet processor configured to receive an initial communication of a traffic flow; a logic node configured to retrieve message parameters from the initial communication; a trigger module configured to broadcast the message parameters to at least one other accelerator system; wherein the logic node is configured to pair the first accelerator system with a second accelerator system from the at least one other accelerator system to provide for traffic management of the traffic flow.

In some cases, the packet processor is configured to: receive a data segment; and the trigger module is configured to trigger an acknowledgement message from the second accelerator system and a memory module is configured to add the data segment to a local cache.

In some cases, the acknowledgement is a pre-acknowledgement to provide for flow acceleration for the traffic flow.

In some cases, the packet processor is configured to receive an acknowledgment for a data segment; and the trigger module is configured to send a message to trigger a release from cache of the acknowledged segment from the second accelerator system.

In some cases, the logic node is configured to retrieve policies from a policy engine to influence the behavior of the first and second accelerator system.

In some cases, the logic node is configured to send at least one sync-up protocol message to the second accelerator system at predetermined time intervals.

In some cases, the sync-up messages between the first and the second accelerator system are batched messages.

Other aspects and features of the present disclosure will become apparent to those ordinarily skilled in the art upon review of the following description of specific embodiments in conjunction with the accompanying figures.

### BRIEF DESCRIPTION OF FIGURES

Embodiments of the present disclosure will now be described, by way of example only, with reference to the attached Figures.
Figs. 1A and 1B illustrates environments for a system for managing network traffic according to an embodiment;
Fig. 2 is a sequence diagram of TCP acceleration;
Figs. 3A and 3B illustrate a system for managing network traffic using TCP acceleration according to an embodiment;
Fig. 4 is a flowchart of a method for managing network traffic using TCP acceleration in a distributed environment according to an embodiment;
Fig. 5 is a sequence diagram for an example of TCP acceleration in a distributed environment; and
Figs. 6A to 6D illustrate further methods for managing network traffic in a distributed environment according to an embodiment.

### DETAILED DESCRIPTION

Generally, the present disclosure provides a method and system for managing network traffic and providing Transmission Control Protocol (TCP) acceleration and TCP buffering in a distributed environment. The client and server complete an initial handshake. During the initial handshake, a first TCP accelerator will receive the SYNACK from a sender and will broadcast the event to the TCP accelerator cluster. After the broadcast event, a second TCP accelerator that has SYN packet would send UPDATE message to the first TCPA that received SYNACK packet. That would establish the asymmetric pair for the connection. The corresponding second TCP accelerator that has received the ACK for the SYN ACK pairing is intended to pair with the first TCP Accelerator as detailed herein. This allows the first and second TCP accelerator to communicate such that the TCP acceleration process can be completed in a distributed environment. The first TCP accelerator caches data from the server while the second TCP accelerator caches data from the client. The first TCP accelerator releases the data on receipt from a trigger from the second TCP accelerator and the second TCP accelerator is intended to release data from a trigger from the first TCP accelerator. It will be understood that the roles of the first and second TCP accelerator can be reversed.

The following definitions are used within this application and are included here in order to aid in the understanding of this application.
i. TCP: Transmission control protocol
ii. TCPA: TCP Acceleration system sometimes referred to as a TCP Accelerator
iii. RTT: Round trip time in TCP connection
iv. SYN: Connection creation packet (synchronize) in TCP protocol from client
v. SYNACK: Connection creation packet from Server in in TCP protocol
vi. ACK: Acknowledgement packet from receiver for delivered segment(s)
vii. Slow-start protocol: This is the mechanism part of TCP congestion control algorithm to exponentially increase the sender window size till it reaches show-start threshold.
viii. TCP segment cache: This a storage in the system, where TCP segments are kept before sending the segment to receiver.

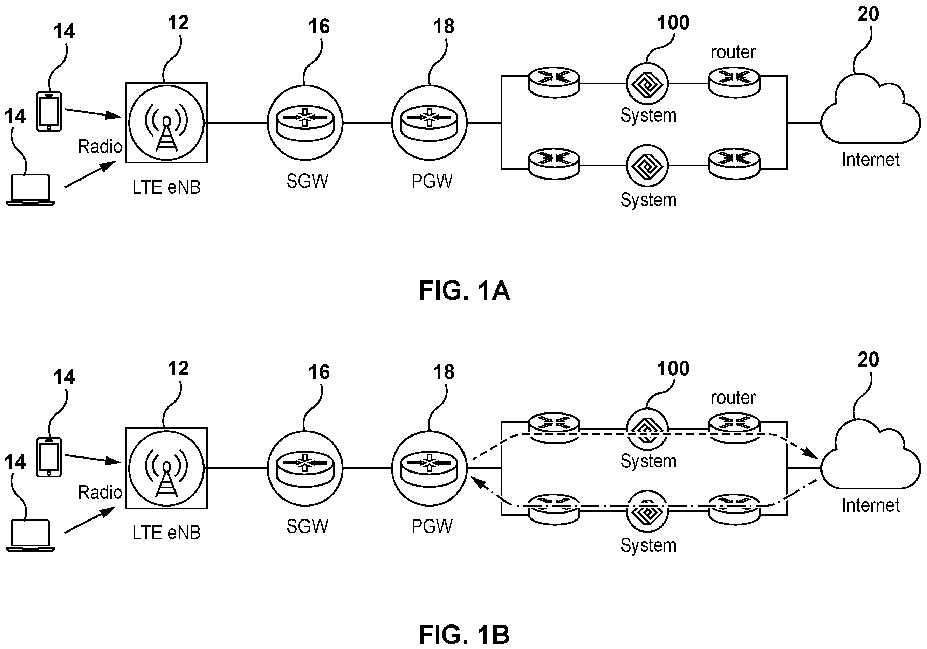

Figures 1A and 1B illustrate an environment for an embodiment of the distributed system 100 detailed herein. Figures 1A and 1B show a diagram of a computer network architecture. It will be understood that at least one Evolved Node Base station (eNodeB) 12 resides within a Radio Access Network (RAN) (not shown). The eNodeB 12 is designed to allocate the network resources among the various users and the user devices 14. The RAN is in communication with a core network. The eNodeB 12 connects to the core network via a serving gateway (SGW) 16, which is further in communication with a packet data network gateway (PGW) 18 which is in communication with the Internet 20. The system 100 is configured to be transparent to the users. It will be understood that figure 1 illustrates a high level network architecture and that a computer network generally includes further aspects not illustrated. In some cases, the system will be located on the Internet side of the PGW 18 as shown in figure 1B.

A system 100 for managing traffic flows, for example, buffering and accelerating TCP traffic flows, is intended to reside in the core network. In particular, the system 100 may be an inline probe north of the PGW 18, between the SGW 16 and PGW 18 (as shown), or in another location where the system is able to access the data noted herein for TCP traffic flows. It will be understood that in some cases the system will be a physical network device or while in other cases the system will be a virtual networking device. It will be understood that the system can be used on any IP based networking system, for example, Wi-Fi based, mobile data networks like GPRS, CDMA, 4G, 5G, LTE, satellite based, WLAN based networks, fixed line broadband fiber optic networks as well as on virtual private networks.

In some cases, the system and method detailed herein are intended to provide for a TCP Accelerator system in asymmetric deployment where a TCP flow in two directions are handled by two different Logic nodes and different TCP flows of a subscriber travel through various Logic nodes.

Transmission control protocol (TCP) is a transport layer protocol and one of the main internet protocols. TCP is a connection oriented protocol. TCP provides reliable and ordered delivery of streams of bytes between client and server. TCP has an inbuilt congestion control mechanism that is designed to avoid some congestion in the network. These inbuilt mechanisms generally help to avoid packet drops, retransmission of packets and larger round trip time (RTT). These mechanisms also help to maximize use of the network bandwidth without creating congestion in the network.

TCP is generally considered to be a reliable protocol by design. The reliability of TCP protocol mandates that to keep a TCP segment cache at a TCP sender node before sending any segment to a TCP receiver. The segments will be in the TCP segment cache till the acknowledgement is received from TCP receiver. Only when the delivery of segment acknowledgement is received, the next segment can be freed from the TCP cache at the sender. This TCP cache may also be used to retransmit segment in case of the segment is lost in the network. Every TCP sender has a mechanism to detect packet loss, for example by using a timer based mechanism, duplicate ACK packet and SACK packets from receiver, or using both methods. The function of TCP segment cache is very important for each TCP peer in network.

In some cases, distributed accelerator systems are used. The TCP Accelerator system (sometimes referred to as accelerator system) in a network environment is configured to play a role of transparent TCP middle box, for speeding up TCP traffic and handling buffer bloat in network. The TCP Accelerator system is configured to act as a TCP peer node to end user. Each TCPA system is intended to maintain two TCP endpoints, one will act as a server peer of a Client end-point and another will act as a client peer of a Server end-point. The TCPA system generally keeps tracks of two sides of the TCP stacks so that the TCPA process is transparent to actual endpoints. By maintaining two sides of TCPA stacks, the TCPA system works to optimize the congestion control, round trip time and retransmission parameters of TCP connection and tries to improve subscriber level experience.

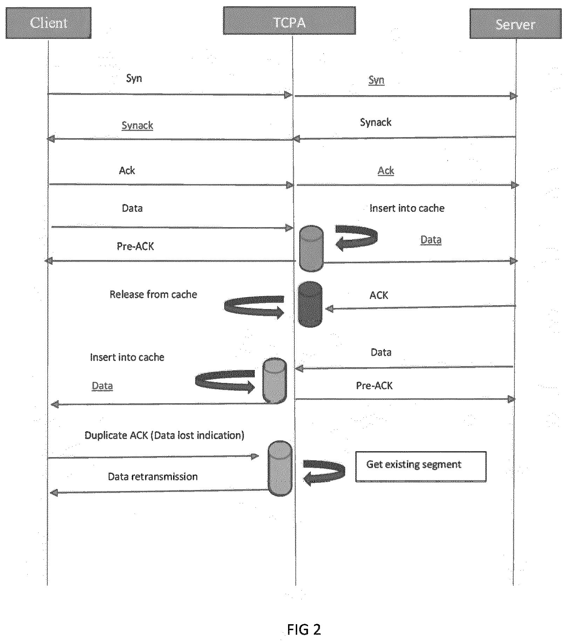

In general, the TCP system uses the following process to accelerate TCP connections in network as shown in the sequence diagram in figure 2. As soon as the TCPA system receives data packet from peers, the system inserts the packet into its Segment cache and sends an ACK packet to the peer. This action is considered a PRE-ACK, which triggers the peer's slow-start congestion method early. Triggering the slow-start congestion method early is intended to allow the peer to send more packets sooner, which can overcome the slow-start phase early. Without the TCPA system, the ACK packet would come from the other peer in network which would have a higher RTT time than TCPA system being in middle in this system as can be seen in figure 2.

The TCPA system can further be used for buffer management. The TCPA system maintains TCP Segments cache per direction of the TCP connection. Since the TCPA system is configured to maintain its own buffer, it can advertise a higher window size to optimize the network bandwidth at core network. The TCPA system can use different buffer management methods to optimize subscriber buffer in network to avoid buffer bloat in network.

The TCPA system is intended to use existing congestion control methods like New-reno, BBR and other proprietary methods to manage network bandwidth better. It is intended, by sending PRE-ACK, the TCPA system helps peers to cross the slow-start phase early. Crossing over the slow-start phase early is intended to allow the TCP connection to use network bandwidth efficiently.

Since the TCPA system is in the middle of the network, and as the TCPA system takes ownership of the TCP segments, the TCPA system can retransmit the TCP segments from its Segment Cache. This has conventionally been shown to drastically improve roundtrip time of retransmitted packets from peers.

Being in the middle of the network, the TCPA system has more visibility into the TCP connections of a subscriber and thus can manipulate window size accordingly to prevent or reduce possible buffer bloat in network. Preventing buffer bloat is intended to prevent packet drops and possible packet retransmission.

In a symmetric environment, both sides of a TCP connection will land into the same TCPA system. The TCPA function within the same system will have information and access to both sides of the TCP Segment cache for a TCP connection as shown in figure 2.

Since the TCPA system acts as end points of both client node and server node, it is able to maintain TCP segment cache for both end points, to maintain reliability of the connection. Being a core network system, the TCPA system is configured to handle huge core network bandwidth, in the range of terabytes based on the size of the network. Thus, it has been found that it can be beneficial to have a similar TCPA function within a distributed network function. It has been determined that a single system may not handle such a large capacity of bandwidth. With a plurality of TCPA systems, a larger capacity of bandwidth can be serviced.

It has also been found that distributed networks have a geographical advantage. In terms of redundancy, it has been determined that scattering over a plurality of access-points distributed network are better. There are generally many individual TCPA systems in a cluster to handle the TCPA function and manage such huge volume of network bandwidth.

There is another property in most of the current network which adds to the complexity of the solution of TCPA in core network. Traditional IP routing can forward each packet in a flow along a different path as long as the packet arrives at its intended destination. But with a function like TCPA, the system is required to see or review each packet in a flow to perform the function. When one side of the flow lands in one TCPA system and another side of the flow lands on another TCPA system it is referred to as Asymmetric traffic. That means for TCP connection, one side of the connection takes one path (route) in network and another side of the connection can take completely another path (route) in network. For a distributed systems in a cluster, one system sees or is responsible for one side of a TCP connection and another system is responsible for the other side of the same TCP connection. For TCP cache management, this scenario creates a lot of complexities, as there is now a need for a mechanism to synchronize between two TCPA systems to manage TCP cache for the single connection.

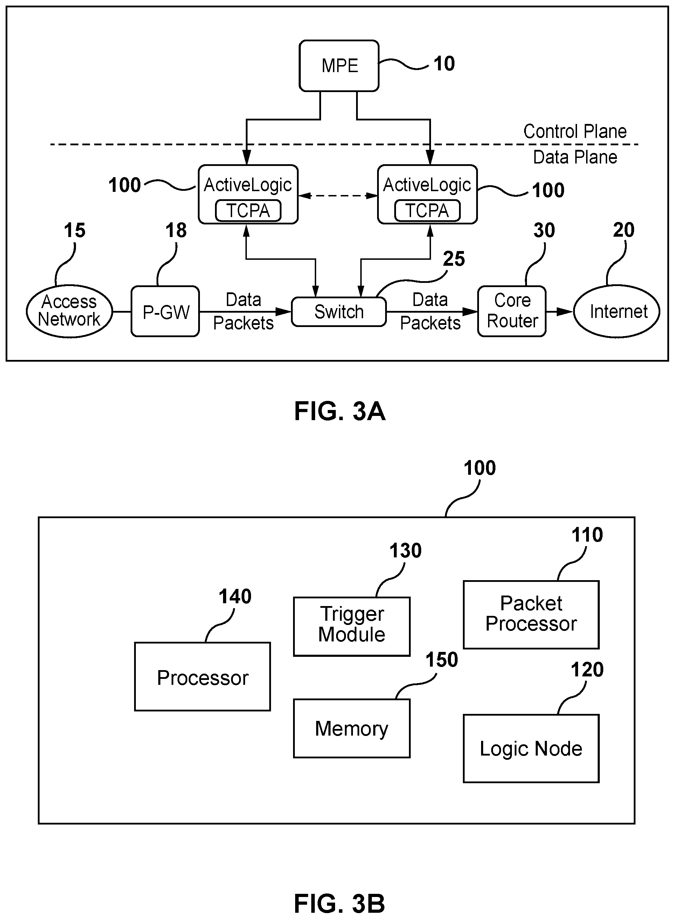

Figure 3A illustrates an embodiment of the system illustrating two distributed accelerator systems 100 for managing network traffic, for example a first and a second accelerator system. Network traffic flows from an access network 15, through a packet gateway 18 to a switch 25. The switch 25 then routes traffic to and from the distributed system 100 based on the network configuration. The prioritized and shaped traffic is sent to the core router 30 and the Internet 20. It will be understood that traffic flowing from the Internet 20 to the Access Network 15 will generally traverse the same elements in the opposite order. The Policy Engine (PE or MPE) 10 is intended to be a control plane element with knowledge of subscriber mapping to traffic flows and also provision parameters, for example, shaper parameters, to the system. The PE is configured to further provide logic and trigger point for the packet processor, in that the TCP accelerators work selectively for a subset of the network traffic and not necessarily the total incoming traffic seen by the system.

Figure 3B illustrates an embodiment of a distributed system 100 for managing network traffic in a distributed environment. The system includes a packet processor 110, a logic node 120, a trigger module 130, at least one process 140 and at least one memory component 150. The system is intended to include a plurality of these distributed systems having similar components to create a cluster of systems to perform the managing of the network traffic. The system is generally intended to be distributed and reside in the data plane. The processor is configured to execute the instructions stored in the memory component in order for the modules to execute their functions. The system 100 is intended to receive information from the computer network equipment that allows the system to determine policy rules and prioritization rules for the network.

The packet processor 110 is configured to receive a packet as an initial communication packet setting up a traffic flow from a client to a server or determine if it is a further packet of an existing traffic stream. The packet processor 110 also identifies if the packet is a TCP stream and should be further reviewed or if it is another protocol that is not intended to be accelerated or buffered by the system. Although the examples provided herein are illustrated with a TCP stream, it will be understood that the system 100 would work for any reliable data stream delivery service, for example User Datagram Protocol (UDP), QUIC, or the like. UDP and QUIC provide for retransmissions and acknowledgments in a similar manner as TCP and would therefore also benefit from embodiments of the system and method provided herein.

The Logic node or Logic module 120 refers to an entity that receives packets from the packet processor and identifies an appropriate action associated with the packet. If the packet is an initial communication packet as detailed herein, the logic node broadcasts to the TCPA systems within the cluster to determine the paired TCPA system in the cluster for the traffic flow. In some cases, the packet is cached in the memory component, in other cases a trigger is invoked to have a distributed TCP A system's cache triggered to send packets, in other cases, the logic node 120 determines that an ACK or other message should be sent to a sender or receiver as detailed herein.

The Trigger module 130 is configured to trigger the release of packets from another distributed system's TCPA cache. The trigger module 130 triggers this release on the paired TCPA system of packets to the appropriate recipient as detailed herein.

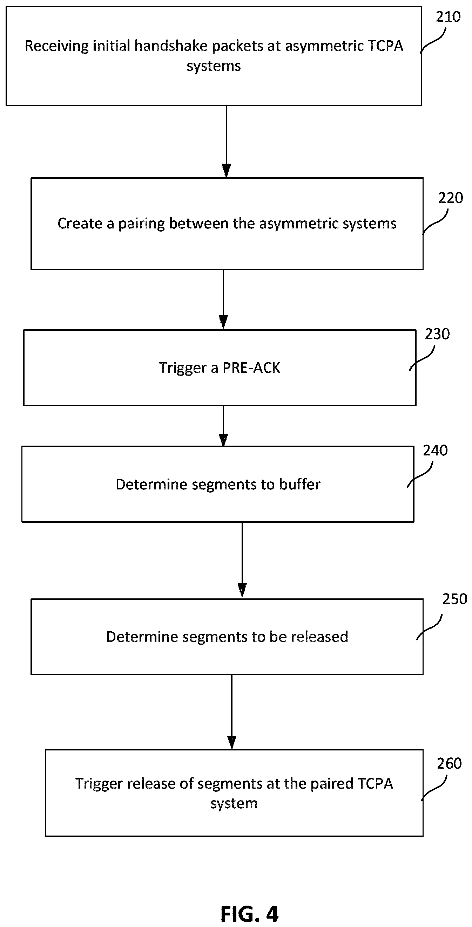

Figure 4 illustrates a method of managing traffic flows in a distributed solution. In particular, the method provides for a synchronization protocol to manage TCP cache part of different systems for same TCP connection in same cluster. In case of asymmetric scenario, at 210, one side of TCP connection lands a SYN packet on a first system in the cluster. Further, the other side of the TCP connection lands a SYNACK packet on a second system in the cluster. When such asymmetric condition is detected for a connection, a pairing is created at 220. To create the pairing, there will be an announcement in the cluster to start a process to detect the pair of systems that are part of the asymmetric connection. Once the systems are identified and they are known to each other in the part of an asymmetric connection, the sync up protocol will be continued during the connection.

In a particular example, a SYN packet is landed on a TCPA system A in a cluster. This SYN packet is reviewed by the packet processor and the logic module creates a TCP state for this new connection. The packet is further directed to the recipient, such as the server. Subsequently, a SYNACK packet is received or retrieved by the packet processor on a TCPA system B in the same cluster. Since system B did not receive SYN before for the same connection, the logic module determines that the connection is asymmetric. The logic module of system B is configured to have the trigger module trigger an Asymmetric Event broadcast message. Further, the logic module of System B creates a TCP state for this SYNACK connection message.

The pairing is intended to be created via an asymmetric event broadcast message for this new asymmetric connection. The broadcast message is intended to be delivered to the other TCPA system in the clusters with sufficient detail to identify the TCP traffic flow. Once System A receives the Asymmetric Event broadcast message, System A understands the connection is asymmetric based on processing the message and updates the connection state that was previously saved in the memory component. Then System A is configured to send an UPDATE message to System B to inform about the other half of the connection and with a new asymmetric connection ID for this connection sync-up to complete the pairing for the traffic flow.

Data packets begin to be received by System A. The received segment is inserted in TCP Cache-A in System A. At, 230, the system is configured to trigger a pre-ACK to allow for system B to send an Ack for the data message.

At 240, the system determines which segments should be buffered and stored in a local cache. The data packets, which are part of the traffic flows, that are selected for TCPA acceleration based on rule engine evaluation from, for example, the policy engine, should be buffered locally. Local buffering is provided to improve TCP flow acceleration. By storing segments locally, the system can send pre-acknowledgement (PRE-ACKs), which have been shown to help in speeding-up TCP connection. By doing local cache of data segment, the system can advertise a higher TCP window size than the initial connection window size. It is intended that the local cache will have a higher window size than the intended recipient of the data segments, thus is able to pull data faster from a peer for delivery. The local cache also helps to retransmit faster from the local system cache in case of any packet loss event. The ability to provide TCP acceleration to the traffic flow is intended to improve the Quality of Experience for the end user of the network.

At 250, the logic node at system A will send a Sync-up message to System B to send ACK message for this new segment received, which is in the second direction of the connection. This new segment will be forwarded to the appropriate peer from TCP Cache by System A, based on TCP window availability of the peer.

Further, an ACK packet is received at System B from the server. Receiving this Ack will, at 260, will trigger System B to send a release segment Sync-up message to System-A to delete the corresponding segment from TCP Cache-A as the data has been received by the endpoint.

Further, when System B receives a new Data packet, the packet is reviewed by the packet processor and inserted in TCP Cache B. A sync-up message is sent to System-A to send an ACK message for this new segment received, which is in other direction of the connection. This new segment will be forwarded to peer from TCP Cache by System B, based on TCP window availability.

In some cases, System A receives a Duplicate ACK message. Based on TCP Logic, System A is configured to determine if there is a packet lost in the network and which packet is lost. System A then sends a retransmit segment Sync-up message to System B. Any lost segment is retransmitted from TCP Cache-B by System B.

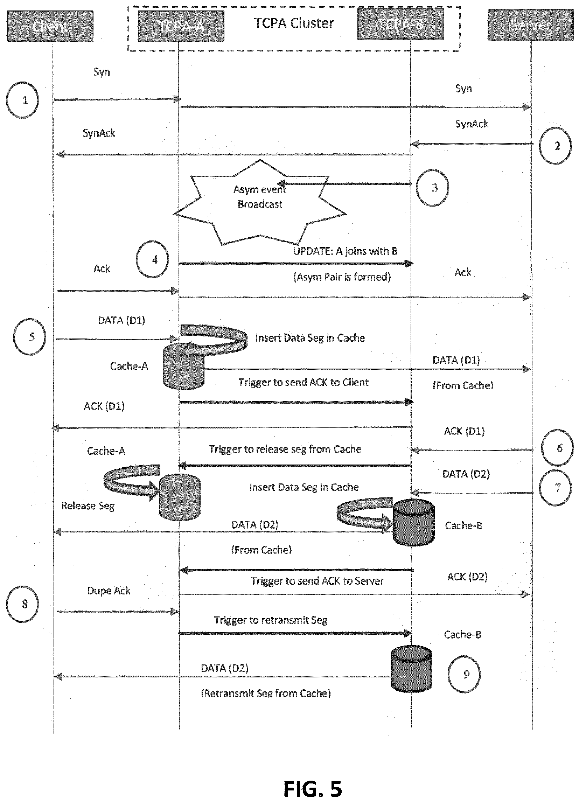

Figure 5 illustrates a sequence diagram of the paired systems for managing traffic flow and the messaging between the systems and between each system and the client and server of the traffic flow. In this example, the initial communication between the client and server is intercepted and reviewed by the asymmetric TCPA systems in the cluster. The second TCPA system on receiving the SYNACK message from the server forwards the message but also broadcasts an Asymmetric event to pair with the TCPA system that received the Syn message from the client. Each TCPA system is configured to receive and cache data segments from the respective endpoint and communicate with the paired TCPA system to release segments from cache on receipt of ACK messages. This allows the system with distributed TCP accelerators to perform TCP acceleration via the distributed system.

A distributed network with many logic nodes is designed to handle a huge amount of traffic. Since distributed networks can be scattered in different places geographically, the system is intended to be able to intercept most of the connections even those, which are asymmetric in nature. The distributed network is intended to cover most of the network, so it has the advantage of receiving or retrieving information associated with the congestion and buffer-bloat or RTT information from the network. As such, systems within the distributed network are configured to act accordingly, for example, better buffer management, better receive and send window management and the like. The distributed network has the advantage of providing high availability service in comparison to a non-distributed network. Further, if one node fails another node can take charge of the service.

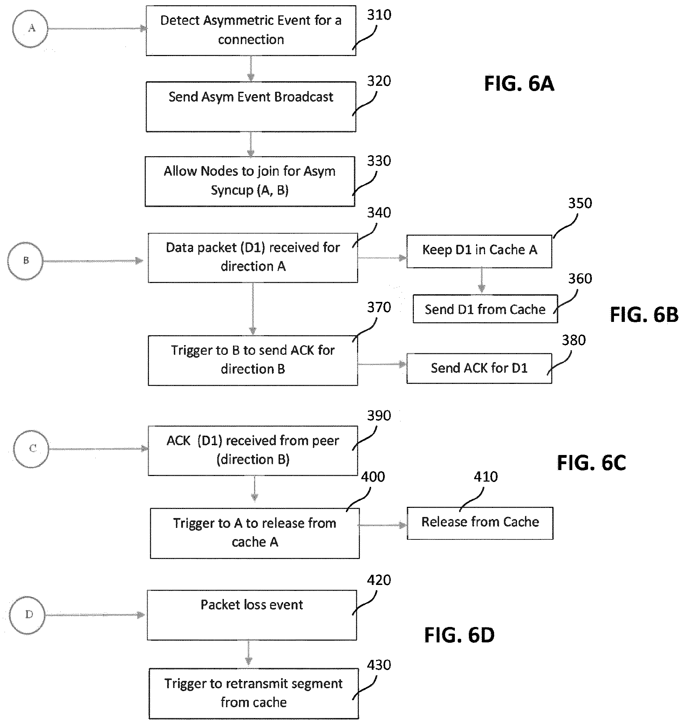

Figure 6A provides for a method for an asymmetric event connection according to an embodiment. At 310, when a system within a cluster detects an asymmetric connection, for example by receiving a SYNACK without having received a SYN message, an asymmetric event message (AEM) is broadcasted by asymmetric event detecting node, at 320. A node in a cluster detects the asymmetric connection when it receives SYNACK packet without seeing SYN packet. A message type AEM is broadcast in the cluster to identify the node which has seen SYN packet for that connection, and the nodes can pair to allow for synchronized communication at 330. The AEM message can configured with the fields shown below and can also contain local node information so that recipient can contact the node.

| **Element Name** | **Description** |
|---|---|
| Source-Node-MAC | MAC of the node sending AEM message |
| Source-Node-IP | IP of the node sending AEM message |
| Source-Node-ID | Unique ID of the source node in the cluster |
| Message-type (AEM) | The type of the AEM message |
| Asymmetric-connection-ID | Unique TCP connection ID to identify current connection |
| SYNACK-Pkt-Src-IP | Source IP of the SYNACK packet which triggers AEM message |
| SYNACK-Pkt-Dst-IP | Destination IP of the SYNACK packet which triggers AEM message |
| SYNACK-Pkt-Src-Port | Source Port of the SYNACK packet which triggers AEM message |
| SYNACK-Pkt-Dst-Port | Destination port of the SYNACK packet which triggers AEM message |
| SYNACK-Pkt-Seq-number | The sequence number of the SYNACK packet |
| SYNACK-Pkt-Ack-number | The acknowledgement number of the SYNACK packet |

When a second system in the cluster receives the AEM message for a SYNACK packet, which is matching to the SYN packet received by that second system, the second system sends an UPDATE message with its own node details to the first system which initiated the AEM message to join into asymmetric pair for that connection. The logic to identify the matching SYN for a SYNACK is using Src-ip, Dst-ip, Src-port, Dst-port of the SYNACK packet and using the ACK number of the SYNACK packet which should match with the SEQ number of SYN packet. The current node can store SEQ number of UPDATE packet for future use. In the UPDATE message a unique ID is generated to identify this new Asymmetric pair. An example of the data sent to the first system is shown in the table below. It will be understood that different fields may be used.

| **Element Name** | **Description** |
|---|---|
| Source-Node-MAC | MAC of the node sending UPDATE message |
| Source-Node-IP | IP of the node sending UPDATE message |
| Source-Node-ID | Unique ID of the source node in the cluster |
| Message-type (UPDATE) | The type of the UPDATE message |
| Asymmetric-connection-ID | Unique TCP connection ID to identify current connection |
| SYN-Pkt-Src-IP | Source IP of the SYN packet for this TCP connection |
| SYN-Pkt-Dst-IP | Destination IP of the SYN packet for this TCP connection |
| SYN-Pkt-Src-Port | Source port of the SYN packet for this TCP connection |
| SYN-Pkt-Dst-Port | Destination port of the SYN packet for this TCP connection |
| SYN-Pkt-Seq-number | The sequence number of the SYN packet |
| SYN-Pkt-Ack-number | The acknowledgement number of the SYN packet |

Figure 6B is a flow chart of sending a trigger for a remote ACK message according to this embodiment. The system is configured to receive the data packet at 340 and cache the data packet at 350. This ACK message is sent by a system, which has received a data packet from the peer and has already buffered that data segment in a local TCP Cache, at 360. Since the data segment is successfully received by local TCPA, an ACK packet should be sent to the peer to acknowledge the packet. It will be understood in the Asymmetric scenario, the reverse direction is part of different node in asymmetric pair. As such, the trigger to send an ACK message, at 370 is sent to the paired node, which triggers the paired node to send an ACK message to peer for the data segment. The trigger for remote ACK message can contain triggers for one ACK message or a plurality of ACK messages that can be batched together for the same peer or recipient at 380. The table below illustrates example fields that are included in the message from one system to the other.

| **Element Name** | **Description** |
|---|---|
| Asymmetric-connection-ID | Unique TCP connection ID to identify current connection |
| Source-Node-ID | Unique ID of the source node in the cluster |
| Message-type (SAM) | Enum, the type of the SAM message |
| ACK | The remote ACK packet will be sent using this ACK number |

The system is further configured to deliver a trigger to Clear Segment messages as shown in figure 6C. This message is sent by a TCPA system, which has received an ACK packet from the peer, at 390. Since each TCPA system can delete the segments which have been acknowledged, the pair of nodes need to communicate to remove the segment. The TCPA system sends the trigger to clear segment messages, at 400, and the TCPB system then clears the segments from the TCP cache remotely, at 410. Example fields included in the message are shown below.

| **Element Name** | **Description** |
|---|---|
| Asymmetric-connection-ID | Unique TCP connection ID to identify current connection |
| Source-Node-ID | Unique ID of the source node in the cluster |
| Message-type (CSM) | Enum, the type of the CSM message |
| ACK | All the segments, less than or equal to this ACK number will be cleared from Segment cache. |

Figure 6D illustrates an example Retransmit Segment message (RSM). This message is sent by a TCPA system, which received Duplicate ACK packet from the peer which indicates a packet lost event, at 420. As this duplicate ACK indicates the packet has been lost in the network, a sync-up message, for example a retransmit segment message, is sent from the system receiving to the duplicate ACK to the Asymmetric pair system to retransmit lost segments remotely, at 430. In cases where a plurality of segments are lost in the network, which may or may not be to be consecutive segments. Using SACK block nonconsecutive lost segments can be identified. There are two standard scenarios in case of packet lost in the network. The first, a single packet is lost (for example, a packet of size 100, from seq number 10000 to 10100, is lost). That is generally detected by duplicate ACK packet. The second, a plurality of packets are lost, (for example, packet A of size 100, from sequence number 21000 to 21100 and packet B of size 200, from sequence number 25000 to 25200 are lost). That is detected by a SACK message. SACK has an option to mention a plurality of lost packets, using lost packet segments sequence number.

| **Element Name** | **Description** |
|---|---|
| Asymmetric-connection-ID | Unique TCP connection ID to identify current connection |
| Source-Node-ID | Unique ID of the source node in the cluster |
| Message-type (RSM) | Enum, the type of the RSM message |
| Number of lost segment (N) | Number of segments need to be retransmitted from remote node. |
| Lost-segment-start-seq [1] | The start sequence of lost segment 1 |
| Lost-segment-end-seq [1] | The end sequence of lost segment 1 |
| ... | ... |
| Lost-segment-start-seq [N] | The start sequence of lost segment N |
| Lost-segment-end-seq [N] | The end sequence of lost segment N |

Since there can be many TCP asymmetric connections between two Asymmetric node pair in a cluster, to improve performance of the cache sync-up protocol and triggers detailed herein, and to utilize network link between Asymmetric node pair, the messages can be batched together. Each TCPA system is intended to include a timer, which can be referred to as an asymmetric-batch timer. Within each timeout interval, the group of Cache sync-up protocol messages can be grouped within a single message and can be sent to remote node. A timeout interval depends on the average RTT values, with the interval being similar to the RTT values. In some cases, the time out interval is set in the range of 100 milliseconds as a default and amended periodically. In some cases, messages like SAM, CAM, RSM can be batched together. Some messages are more time sensitive or will be required for connection pair setup and should be sent as soon as possible and not batched with other messages.

| **Element Name** | **Description** |
|---|---|
| Source-Node-ID | Unique ID of the source node in the cluster |
| Message-type (BATCH) | The type of the BATCH message |
| Number of messages (N) | Number of message part of this batch |
| Asymmetric-connection-ID [1] | Unique TCP connection ID to identify connection [1] |
| Sub-Message-type [1] | Enum, must be of type SAM, CAM, RSM |
| <body of Sub-Message-type [1]> | Elements of Sub-Message-type [1] |
| ... | |
| Sub-Message-type [N] | Enum, can be of type SAM, CAM, RSM |
| <body of Sub-Message-type [N]> | Elements of Sub-Message-type [N] |

In some cases, the control plane or policy engine influences the behavior of the system and each individual TCPA's behavior. The control plane can set the rules for which TCPA function will select a set of traffic flows for acceleration. The parameters based on the rule will be triggered and can be configured dynamically from Policy engine during runtime. Using the policy engine and rule engine, the TCPA function can be controlled for the various traffic flows. Traffic flows such as TCP, UDP and other similar protocols benefit from such a distributed traffic acceleration system.

In the preceding description, for purposes of explanation, numerous details are set forth in order to provide a thorough understanding of the embodiments. However, it will be apparent to one skilled in the art that these specific details may not be required. It will also be understood that aspects of each embodiment may be used with other embodiments even if not specifically described therein. Further, some embodiments may include aspects that are not required for their operation but may be preferred in certain applications. In other instances, well-known structures are shown in block diagram form in order not to obscure the understanding. For example, specific details are not provided as to whether the embodiments described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with other modules and elements, including circuitry or the like, to perform the described tasks.

The above-described embodiments are intended to be examples only. Alterations, modifications and variations can be effected to the particular embodiments by those of skill in the art without departing from the scope, which is defined solely by the claim appended hereto.

## Claims

1. A method for distributed traffic management on a computer network, the method comprising:
receiving an initial communication of a traffic flow by a packet processor of a first accelerator system;
retrieving message parameters from the initial communication;
broadcasting the message parameters to determine a second accelerator system receiving a reply to the initial communication; and
pairing the first accelerator system and the second accelerator system to provide for traffic management of the traffic flow.

2. The method of claim 1 further comprising:
receiving a data segment at the first accelerator system;
adding the data segment to a local cache of the first accelerator system;
triggering an acknowledgement message from the second accelerator system; and
sending the acknowledgement to a sender of the data segment from the second accelerator system.

3. The method of claim 2 wherein sending an acknowledgement comprises sending pre-acknowledgement to provide for flow acceleration for the traffic flow.

4. The method of any one of claims 1 to 3 further comprising using early retransmission from the local cache on determination of packet loss for the traffic flow.

5. The method of any one of claims 1 to 4 further comprising advertising a window size associated with the traffic flow to be higher than an initial size to increase the available bandwidth for the traffic flow.

6. The method of any one of claims 1 to 5 further comprising:
receiving an acknowledgment for a data segment from a recipient of the traffic flow at the second accelerator system; and
triggering a release from cache of the acknowledged segment from the first accelerator system.

7. The method of any one of claims 1 to 6 wherein the traffic flow is a Transmission Control Protocol, User Datagram Protocol or QUIC traffic protocol traffic flow.

8. The method of any one of claims 1 to 7 further comprising:
sending at least one sync-up protocol message between the first and the second accelerator system at predetermined time intervals.

9. The method of claim 8 wherein the predetermined time interval is based on a round trip time of the traffic flow.

10. A system for distributed traffic management on a computer network, the system comprising:
a first accelerator system comprising:
a packet processor configured to receive an initial communication of a traffic flow;
a logic node configured to retrieve message parameters from the initial communication;
a trigger module configured to broadcast the message parameters to at least one other accelerator system;
wherein the logic node is configured to pair the first accelerator system with a second accelerator system from the at least one other accelerator system to provide for traffic management of the traffic flow.

11. The system of claim 10 wherein the packet processor is configured to receive a data segment;
the trigger module is configured to trigger an acknowledgement message from the second accelerator system; and
a memory module is configured to add the data segment to a local cache.

12. The system of claim 11 wherein the acknowledgement is a pre-acknowledgement to provide for flow acceleration for the traffic flow.

13. The system of any one of claims 10 to 12 wherein the packet processor is configured to receive an acknowledgment for a data segment; and
the trigger module is configured to send a message to trigger a release from cache of the acknowledged segment from the second accelerator system.

14. The system of any one of claims 10 to 13 wherein the logic node is configured to send at least one sync-up protocol message to the second accelerator system at predetermined time intervals.

15. The system of claim 14 wherein the predetermined time interval is based on a round trip time of the traffic flow.
